# EUROPÄISCHE PATENTANMELDUNG

(11) **EP 0 565 077 A1**
(43) Veröffentlichungstag der Anmeldung: **13.10.1993**
(21) Anmeldenummer: 93105761.6
(22) Anmeldetag: 07.04.1993
(51) Int. Cl.: B29C 65/20, B26D 7/18

(54) **Vorrichtung und Verfahren zum Bearbeiten von Profilsträngen, insbesondere von Dichtungsprofilen für Fenster, Türen oder dgl.**

(30) Priorität: 07.04.1992 DE 4211675
(71) Anmelder: STAHLGRUBER Otto Gruber GmbH & Co., D-81675 München (DE)
(72) Erfinder:
(74) Vertreter: Patentanwälte Beetz - Timpe - Siegfried Schmitt-Fumian - Mayr

(57) **Zusammenfassung**

Die Erfindung betrifft eine Vorrichtung und ein Verfahren zum Bearbeiten von Profilsträngen, insbesondere von Dichtungsprofilen für Fenster, Türen od. dgl., wobei auf einer Grundplatte (1) Profilhalter (2, 3) angeordnet sind. Nach dem Einlegen von einem Profilstrang (29) in die Profilhalter (2, 3) kann die Vorrichtung durch Aufbringen einer vertikalen Druckkraft auf die Knäufe (23, 25) vertikal mit der Grundplatte (1) nach unten in eine Schneidstellung gegen eine Federkraft geschoben werden. Hierbei wird der Profilstrang (29) oder überstehende Profilstrangteile durch eine Schneid/Schweißeinheit (5) abgetrennt und von der Schneid/Schweißeinheit (5) durch einen Abstreifer (4) entfernt. Anschließend wird die vertikale Druckkraft auf die Knäufe (23, 25) entfernt, wodurch sich die Grundplatte (1) mit den Profilhaltern (2, 3) wieder nach oben bewegt. In einem nächsten Arbeitsschritt wird die Vorrichtung in eine Schweißstellung gebracht. Dazu wird der Profilhalter (2) durch eine Längsverschiebung nach innen eingerückt, wobei er in einer Endstellung gegen den Profilhalter (3) drückt, wodurch die durch den Schneidvorgang angeschmolzenen Endabschnitte der Profilstrangteile aneinandergedrückt und verschweißt werden.

## Beschreibung

Die Erfindung betrifft eine Vorrichtung und ein Verfahren zum Bearbeiten von Profilsträngen, insbesondere von Dichtungsprofilen für Fenster, Türen od. dgl.

Zur Abdichtung von Fenstern und Türen gegenüber den jeweiligen Rahmen werden üblicherweise Dichtungselemente verwendet. Hierbei ist es wichtig, daß diese Dichtungselemente ein einfaches Schließen der Fenster sowie der Türen ermöglichen und im geschlossenen Zustand eine gute Dichtwirkung erzielen. Unter anderem bei Geräuschschutzfenstern ist es von Bedeutung, daß z. B. der Flügelrahmen des Fensters gegenüber dem Blendrahmen vollständig und ohne Lücken im Abdichtungselement abgedichtet ist. Dies kann z. B. dadurch erreicht werden, daß das Abdichtungselement aus einem Stück besteht, wobei die jeweiligen Endteile verschweißt werden.

An den jeweiligen Fensterecken wird das Dichtungsprofil V-förmig ausgeklinkt und an den Endflächen des Dichtungsprofils verschweißt. Ist jedoch z. B. ein besserer Sitz des Dichtungsprofils erforderlich, so können die Ecken des Dichtungsprofils jeweils entsprechend dem gewünschten Winkel gestanzt und verschweißt werden.

Aus der DE-GM 88 09 805 ist eine Vorrichtung zum Schneiden und Aneinanderfügen von Profilsträngen bekannt, bei der ein Profilstrang in Profilhalter eingelegt und in einem nächsten Arbeitsschritt derart abgetrennt wird, daß die sich nunmehr gegenüberliegenden Enden des Profilstranges einen 90°-Winkel zueinander aufweisen. In einem weiteren Arbeitsschritt können dann die beiden Enden des Profilstrangs durch ein Verschwenken eines Profilhalters um 90° miteinander verschweißt werden.

Während diese Vorrichtung bei einfachen und kleineren Profilen ausreichend gute Verschweißergebnisse liefern kann, treten bei größeren und komplizierteren Profilen konstruktionsbedingte Probleme auf. So hat sich gezeigt, daß die Verschweißung nahe dem Drehpunkt der Verschwenkung des Profilhalters schlechter wird. Insbesondere bei Hohlkammerprofilen und einer hinteren U-Kehle muß oft eine Stützeinlage eingesetzt werden, um eine ausreichend gute Schweißverbindung zu erzielen. Dieser Nachteil resultiert aus einer nicht gleichmäßig über die Anpreßfläche verteilten Druckkraft, wobei sich gezeigt hat, daß die Anpreßkraft mit wachsender Drehpunktnähe geringer wird. Daraus resultiert wiederum, daß die Verschweißung mit sinkendem Abstand zum Drehpunkt schlechter wird. Weiterhin weist diese Vorrichtung V-förmige Schweißmesser auf. Dadurch ist die Anwendung der Vorrichtung auf das Schneiden und Verschweißen von 90°-Gehrungen beschränkt. Da gerade in jüngster Zeit asymmetrische Fenster immer häufiger verwendet werden, können andere Dichtungswinkel, wie 30°- und 60°-Winkel, nicht geschweißt werden. Darüber hinaus ist es mit einer derartigen Vorrichtung nicht möglich, Stumpfschweißungen zum Verbinden von zwei verschiedenen Profilsträngen vorzunehmen, da dafür das V-förmige Schweißmesser ausgewechselt werden müßte.

Die Aufgabe der Erfindung ist es, eine Vorrichtung und ein Verfahren zum Bearbeiten von Profilsträngen, insbesondere von Dichtungsprofilen für Fenster, Türen od. dgl., zu realisieren, die eine gleichmäßige und hochwertige Verschweißung von Profilstrangenden ermöglichen und eine einfache, sichere und schnelle Handhabung erlauben.

Diese Aufgabe wird erfindungsgemäß durch eine Vorrichtung mit einer Grundplatte, auf der Grundplatte angeordneten Profilhaltern zur jeweiligen Aufnahme des oder der Profilstränge, wobei zumindest ein Profilhalter längsverschiebbar relativ zur Grundplatte ausgebildet ist, einer an einem Basisteil angeordneten Schneid/Schweißeinheit mit Stegen und einem an einem Profilhalter verschwenkbar angelenkten Abstreifer, zum Abstreifen abgetrennter Profilstrangteile, gelöst.

Die oder der verschiebbare Profilhalter kann zweckmäßigerweise in einer Führung, die auf der Grundplatte montiert ist, verschoben werden. Durch die Verschiebung des oder der Profilhalter können die in dem Profilhalter befindlichen Profilstränge mit einer gleichmäßigen Anpreßkraft über die gesamte Fläche verschweißt werden, wenn die beiden Profilhalter und damit die Profilstrangenden miteinander in Kontakt gebracht werden. Dadurch kann eine sichere Verschweißung auch von großen oder mit Hohlkammern versehenen Profilformen erreicht werden. Weiterhin können in vorteilhafter Weise Profilstrangenden stumpf verschweißt werden, wenn die Profilhalter Längsachsen aufweisen, die mit einem Winkel von 180° zueinander angeordnet sind, wodurch ein Endlosschweißgerät realisiert wird. Dadurch können Restlängen von Profilsträngen an einen neuen Profilstrang von einer neu aufgesetzten Profilstrangrolle angeschweißt werden, so daß das in einem Betrieb anfallende Abfallvolumen bei der Herstellung von z. B. Dichtungsrahmen sinkt.

Eine vorteilhafte Ausgestaltung der Erfindung ist dadurch gekennzeichnet, daß zumindest ein Profilhalter auf der Grundplatte verschiebbar nach innen in Richtung auf den jeweilig anderen Profilhalter ist, und die Profilhalter-Haltedeckel aufweisen, die zum Öffnen und Schließen der Profilhalter verschwenkbar ausgebildet sind. In der ausgerückten Stellung des oder der Profilhalter ist der Abstand zwischen den Innenflächen der Profilhalter derart bemessen, daß die Schneid/Schweißeinheit mit den Stegen gerade in den durch diesen Abstand gebildeten Raum paßt. In einer Schweißstellung der Vorrichtung kann der verschiebbare Profilhalter, oder die verschiebbaren Profilhalter, gegen den jeweilig anderen Profilhalter geschoben werden, wodurch die in den Profilhaltern befindlichen Profilstrangenden in Kontakt kommen. In der ausgerückten Stellung können in vorteilhafter Weise die Haltedeckel geöffnet und die Profilstränge oder der Profilstrang eingelegt werden. Weiterhin kann eine Sicherheitseinrichtung vorgesehen sein, die sicherstellt, daß der oder die Profilhalter nur geöffnet und/oder geschlossen werden können, wenn sich der oder die Profilhalter in einer ausgerückten Stellung befinden. Darüber hinaus kann eine weitere Sicherheitsfunktion dadurch realisiert werden, daß die Haltedeckel nur dann geöffnet und/oder geschlossen werden können, wenn der oder die Profilhalter in der jeweilig ausgerückten Position angeordnet sind. Durch diese Sicherheitsfunktionen können Bedienungsfehler der Vorrichtung vermieden werden.

Eine weitere vorteilhafte Ausgestaltung der Erfindung ist dadurch gekennzeichnet, daß die Profilhalter jeweils zumindest eine Profilnut in einem an einer Bodenplatte angeordneten Nutformteil und ein an dem Haltedeckel angeordnetes Gegenstück aufweisen, die lösbar an dem jeweiligen Profilhalter angeordnet sind. Dadurch ist es möglich, die Profilhalter an verschiedene Profile anzupassen, da die Nutformteile und die Gegenstücke auswechselbar sind. Dadurch können weiterhin Nutformteile und Gegenstücke eingesetzt werden, die verschiedene innere Endflächenwinkel aufweisen, so daß außer Stumpfschweißungen auch noch andere Gehrungswinkel geschweißt werden können. Die Festlegung der Nutformteile an den Bodenplatten und der Gegenstücke an den Haltedeckeln kann durch Inbus-Schrauben erfolgen, die in der Bodenplatte und dem Nutformteil angeordnet sein können. Die Schraubendurchtrittslöcher können jeweils als Langlöcher ausgebildet sein, so daß die Bodenplatte und/oder das Gegenstück justierbar sind. Zum einfacheren Auswechseln kann das Nutformteil und/oder das Gegenstück auch an der Bodenplatte und/oder dem Haltedeckel festgerastet werden. Eine derartige Festrastung erleichtert das Auswechseln derselben, so daß die Vorrichtung schneller an neue Dichtungsprofile und Gehrungswinkel angepaßt werden kann. Für eine solche Festrastung können Führungsstifte vorgesehen sein, auf die das Nutformteil oder/und das Gegenstück aufgesteckt werden können, so daß eine sichere Führung gewährleistet ist. Als Rastmittel können Federn und/oder Stifte dienen, die elastisch nachgebend eine Festrastung sichern.

Eine weitere vorteilhafte Ausgestaltung der Erfindung ist dadurch gekennzeichnet, daß die Profilhalter jeweils einen ergonomisch ausgeformten Knauf aufweisen, der an den Oberseiten der jeweiligen Haltedeckel festgelegt ist. Der Bediener der Vorrichtung kann durch diese Knäufe zum einen eine Längsverschiebungskraft auf den oder die längsverschiebbar ausgebildeten Profilhalter ausüben und zum anderen eine vertikale Druckkraft auf die Profilhalter und damit auf die Grundplatte aufbringen. Zudem sind die Knäufe in vorteilhafter Weise dazu geeignet, die Haltedeckel zu öffnen und zu schließen.

Wenn der oder die Profilstränge durch ein Schließen der Haltedeckel festgelegt wurden und sich in einer ausgerückten Position befinden, kann die Bedienungsperson durch das Aufbringen einer vertikalen Druckkraft auf die Knäufe die Vorrichtung in eine Schneidstellung bewegen. Die Festlegung des Profilstrangs kann auch durch eine weitere Klemmvorrichtung erfolgen. Diese Klemmvorrichtung kann beim Schließen der Haltedeckel einrasten und z. B. durch eine geeignete Drehung der Knäufe oder durch eine geeignete Betätigung eines anderen Lösemittels gelöst werden. Eine solche Rasteinrichtung kann z. B. ein Klemmhaken oder ein Stift sein, der in eine mit elastischen Mitteln versehene Buchse in einem Gegenstück rastbar ist. Durch diese Rastmittel ist sichergestellt, daß der oder die Profilstränge sicher festgelegt bleiben, auch wenn die Bedienungsperson keine vertikale Druckkraft auf die Knäufe aufbringt.

Eine weitere vorteilhafte Ausgestaltung der Erfindung ist dadurch gekennzeichnet, daß der Abstreifer eine Nockenfläche, die mit einer Anschlagfläche am gegenüberliegenden Profilhalter durch eine Längsverschiebung zumindest eines Profilhalters in Eingriff bringbar ist, und eine Abstreifnase aufweist, die in den von den Stegen gebildeten Raum einführbar ist und der Abstreifer derart ausgebildet ist, daß er durch ein Aufeinanderzubewegen der Profilhalter durch Anlage der Nockenfläche an die Anschlagfläche nach oben gedrückt wird. Der Abstreifer dient in vorteilhafter Weise zum Abstreifen von abgetrennten Profilstrangteilen. Das Abtrennen der Profilstrangteile erfolgt in der Schneidstellung der Vorrichtung, in der der oder die Profilstränge, die sich in den Profilhaltern befinden, durch ein Inkontaktbringen mit der Schneid/Schweißeinrichtung abgetrennt werden. Das Abtrennen kann durch das Inkontaktbringen mit den Stegen erfolgen, wobei die Stege erwärmt sein können. Durch die Erwärmung erfolgt das Abtrennen der Profilstrangteile zum einen durch ein Abscheren bzw. ein Abschneiden und zum anderen durch ein Abschmelzen. Diese abgescherten und/oder abgetrennten Profilstrangteile können dann an den Stegen innen anhaften, da sie durch die beheizten Stege in einem an der jeweiligen Kontaktfläche flüssigen bzw. zähflässigen Zustand gehalten werden und dadurch anhaften. Der Abstreifer dient hierbei in vorteilhafter Weise zum Abstreifen der an den Stegen anhaftenden abgetrennten Profilstrangteile. Zudem erleichtert der Abstreifer das saubere Abtrennen der Profilstrangteile in der Schneidstellung der Vorrichtung.

Weiterhin kann der Abstreifer durch eine Feder in einer Position gehalten werden, in der er auf dem Profilhalter, an dem er angelenkt ist, aufliegt. Dadurch befindet sich der Abstreifer, wenn die Nockenfläche nicht mit der Anschlagfläche in Kontakt steht, in einer unteren Stellung. Die Federkraft ist so stark bemessen, daß die Abstreifnase auch durch an der Innenseite der Stege anhaftende Profilstrangteile nicht an einem Eindringen in den durch die Stege gebildeten Raum gehindert wird. Der Abstreifer kann an dem Profilhalter angelenkt werden, der fest und nicht verschiebbar an der Bodenplatte angeordnet ist. Damit weist die Nockenfläche des Abstreifers in Richtung des längsverschiebbaren Profilhalters. Ein Längsverschieben des Profilhalters aus seiner ausgerückten Ausgangsstellung in Richtung auf den anderen Profilhalter und damit in Richtung der Nockenfläche bewirkt ein Inkontaktkommen der Nockenfläche mit der Anschlagfläche. Durch den beidseitig in vorteilhafter Weise ausgebildeten Kontaktwinkel wird der Abstreifer durch die Anschlagfläche und die Krümmung der Nockenfläche des Abstreifers durch eine Längsverschiebung des Profilhalters nach oben geschoben. Hierbei ist das Gegenstück des Haltedeckels des verschiebbaren Profilhalters vorne derart angeschrägt, daß die Abstreifnase und damit der Abstreifer ohne ein Verklemmen und ohne Kontakt mit dem Profilhalter nach oben verschwenkt werden kann. Der Abstreifer befindet sich in seiner obersten Stellung, wenn sich der längsverschiebbare Profilhalter mit den Innenflächen des Nutformteils und des Gegenstücks an den jeweiligen Innenflächen des anderen Profilhalters befindet, wenn also die Vorrichtung die Schweißstellung einnimmt. Wird der längsverschiebbare Profilhalter wieder durch eine nach außen gerichtete Kraft nach außen bewegt, so gleitet der Abstreifer unter Kontakt der Nockenfläche mit der Anschlagfläche durch die Federkraft und die Schwerkraft wieder nach unten in den Zwischenraum zwischen den beiden Profilhaltern. Wenn sich die Profilhalter in ihrer Ausgangsstellung befinden, nimmt der Abstreifer seine für eine optimale Abtrennung notwendige Abstreifstellung ein. Die Abstreifnase kann auswechselbar angeordnet sein. Weiterhin kann die Abstreifnase durch Verklemmung mit einer Justierschraube justierbar an dem Abstreifer festgelegt werden. Durch das Justieren und durch die Veränderung der Größe der Abstreifnase kann die Vorrichtung auf verschiedene Materialien und Formen sowie der Anzahl der eingelegten Profilstränge angepaßt werden. Durch ein unterschiedliches Gewicht und durch eine unterschiedliche Form können verschiedenen Materialien und Schweißtemperaturen Rechnung getragen werden, so daß eine optimale Abtrennung ermöglicht wird. Der Abstreifer kann weiterhin mit einem kleinen Handknauf versehen werden, wodurch der Abstreifer leicht manuell aus dem Zwischenraum zwischen den Profilhaltern gegen die Federkraft herausverschwenkt werden kann.

Eine weitere vorteilhafte Ausgestaltung der Erfindung ist dadurch gekennzeichnet, daß die Schneid/Schweißeinheit U-förmig ausgebildet ist. Durch die U-förmige Ausgestaltung der Schneid/Schweißeinheit sind die Stege parallel zueinander angeordnet. Dadurch ist es in einfacher Weise möglich, mit einer Schneid/Schweißeinheit eine Stumpfverschweißung und eine Verschweißung mit verschiedenen Gehrungswinkeln vorzunehmen, wenn die entsprechenden Profilhalter mit passenden Einsätzen, wie Nutformteile und Gegenstücken dazu, ausgestattet werden.

Eine weitere vorteilhafte Ausgestaltung der Erfindung ist dadurch gekennzeichnet, daß die Grundplatte mit den Profilhaltern vertikal verschiebbar auf dem Basisteil gelagert ist und durch Federn elastisch in einer oberen Stellung gehalten wird. In einer Ausgangsstellung befindet sich die Grundplatte mit allen daran festgelegten Bauteilen durch die Federkraft in einer oberen Stellung. Durch das Aufbringen einer vertikalen Druckkraft auf die Grundplatte, zweckmäßigerweise über die Knäufe auf den Haltedeckeln der Profilhalter, kann die Grundplatte gegen die Federkraft nach unten bewegt werden. Durch eine Sicherheitseinrichtung kann vorgesehen sein, daß die Bewegung nach unten nur dann möglich ist, wenn sich der oder die Profilhalter in einer ausgerückten Stellung befinden. Dadurch kann sich die Grundplatte über die Schneid/Schweißeinheit bewegen, wobei die Schneid/Schweißeinheit in einem in der Grundplatte ausgebildeten Freiraum aufgenommen werden kann. Weiterhin kann die Grundplatte so weit nach unten bewegt werden, daß zumindest die Oberkanten der Nutformteile der Profilhalter die gleiche Höhe wie die Oberkanten der Stege aufweisen. Dadurch kann ein zwischen den Profilhaltern befindliches Profilstrangteil abgetrennt werden, da der obere Abschluß des Profilstrangteils durch das Gegenstück des Profilhalters vorgegeben sein kann. Zweckmäßigerweise kann die Grundplatte noch etwas weiter nach unten bewegt werden, so daß sich die Oberkanten der feststehenden Stege über den Oberkanten der Nutformteile befinden, wodurch ein sicheres Abtrennen bzw. Abschneiden der Profilstrangteile ermöglicht wird. Die Bewegung der Grundplatte gegenüber dem feststehenden Basisteil kann durch eine Stangen-Hülsen-Führungsvorrichtung erfolgen. Dazu können z. B. an dem Basisteil zwei Führungsstangen mit passender Länge angeordnet sein. Mittels dieser Führungsstangen können Führungshülsen geführt sein, die von der Grundplatte getragen werden. Die Führungshülsen erstrecken sich nach unten von der Unterseite der Grundplatte. Die Bewegung der Grundplatte nach unten kann z. B. gegen die Kraft von Federn erfolgen, die zwischen einer geeigneten Auflage am Basisteil und dem unteren Endteil der Führungshülsen angeordnet sein können. Die Federn können zweckmäßigerweise als Spiralfedern ausgebildet sein, die um die Führungsstäbe herum angeordnet sind. Die Bewegung der Grundplatte nach unten kann damit z. B. von zwei oder vier Führungsvorrichtungen vorgenommen werden. Die Bewegung der Grundplatte nach unten kann durch einen Anschlag begrenzt werden. Dieser Anschlag befindet sich in vorteilhafter Weise auf dem feststehenden Basisteil. Der Anschlag kann zur Dämpfung des Aufpralls bei der Bewegung nach unten aus Hartgummi oder einem ähnlichen Material gebildet sein. Das mit der Grundplatte verbundene Gegenstück zum Anschlag weist eine geeignete Länge auf, so daß sich in der Schneidstellung der Vorrichtung die Oberkante der Stege zumindest etwas überhalb der Oberkante der Nutformteile der Profilhalter befindet, wenn die Vorrichtung in die Schneidstellung bewegt wurde. In vorteilhafter Weise kann z. B. das Gegenstück des Anschlags oder der Anschlag selbst in der Höhe jeweilig eingestellt werden, so daß die Vorrichtung leicht an verschiedene Nutformteile und Gegenstücke angepaßt werden kann. Die Bewegung der Grundplatte nach unten in die Schneidstellung der Vorrichtung erfolgt zweckmäßigerweise durch das Aufbringen einer vertikalen Druckkraft auf die Knäufe der Profilhalter. Durch ein Entfernen der vertikalen Druckkraft bewegt sich die Vorrichtung zurück in ihre Ausgangsstellung, wobei sich die Grundplatte nach oben bis zu einem geeigneten Anschlag bewegt. Dieser geeignete Anschlag kann in den Führungshülsen, den Führungsstäben oder separat gebildet sein, wobei es vorteilhaft ist, wenn dieser Anschlag höhenjustierbar ist, so daß die Höhe der oberen Ausgangsstellung der Grundplatte einstellbar ist.

Anstatt die Grundplatte nach unten zu bewegen, kann auch die Grundplatte feststehend ausgebildet werden. Bei einer solchen Ausführung kann dann die Schneid/Schweißeinheit nach oben bewegt werden, was zweckmäßigerweise z. B. durch einen Fußhebel am Boden der Vorrichtung erfolgt.

Zum Zumessen der zu bearbeitenden Profilhalter kann vor der Vorrichtung eine Zumeßstation ausgebildet sein. Diese Zumeßstation kann als Schiene mit Führungsringen ausgebildet sein, welche von einer Profilstrangvorratsrolle in Richtung auf die Vorrichtung ausgebildet ist. Auf dieser Schiene kann für den Bediener sichtbar ein Maßband angeordnet werden, dessen Anfangsmaß (Null-Maß) auf der der Vorrichtung zugewandten Seite angeordnet ist und von einem Anschlag, der sich auf der der Vorrichtung zugewandten Seite befindet, etwas beabstandet ist. Dieser Abstand entspricht in etwa dem für das jeweilige Gehrungswinkelschneiden und anschließende Verschweißen notwendigen Überstand. Zum Abtrennen des Profilstrangs an einer geeigneten vorher abgemessenen Stelle befindet sich an dem der Vorrichtung zugewandten Seite ein Schneidemesser, welches etwa mittig in einer Schneidevorrichtung ausgebildet ist. Das Messer ist dabei so angeordnet, daß eine Verletzung der Bedienungsperson beim Schneiden ausgeschlossen ist. Das Messer ist derart in eine Aufnahme eingebettet, daß rechts und links des Messers ein geeigneter Abstand geschaffen wird, so daß die Bedienungsperson beim Schneiden des Profilstrangs durch ein Anlegen des oder der Daumen an die Außenflächen des Messeraufnahmeteils einen weiteren geeigneten Überstand ablängen kann, so daß z. B. eine viereckige Profildichtungsform leicht abgemessen und hergestellt werden kann.

Die Aufgabe wird weiterhin durch ein Verfahren mit den folgenden Schritten gelöst: Öffnen von Profilhaltern, wobei sich der oder die Profilhalter in einer ausgerückten Stellung befinden, Einlegen eines oder der zu bearbeitenden Profilstränge in die Profilhalter, Schließen der Profilhalter zum Festlegen des oder der Profilstränge, Bewegen einer Grundplatte mit den damit verbundenen Profilhaltern und dem oder den Profilsträngen gegen eine Federkraft nach unten in eine Schneidstellung, so daß der oder die Profilstränge mit einer Schneid/Schweißeinrichtung derart in Kontakt kommen, daß die nach innen von den Profilhaltern überstehenden jeweiligen Profilstrangteile abgelöst und von einem Abstreifer nach unten gedrückt werden, Bewegen der Grundplatte nach oben und Verschweißen der angeschmolzenen Endflächen des oder der Profilstränge in einer Schweißstellung durch ein Zusammenschieben des oder der Profilhalter, wobei der Abstreifer durch ein Anlegen einer Nockenfläche an eine Anschlagfläche des gegenüberliegenden Profilhalters nach oben aus dem Zwischenraum zwischen den Profilhaltern gedrückt wird.

Durch das erfindungsgemäße Verfahren wird in vorteilhafter Weise ein Schneiden und Verschweißen von Profilstrangteilen realisiert. Durch Federkraft befindet sich die Vorrichtung ohne Krafteinwirkung in einer oberen Ausgangsstellung, in der der oder die Profilhalter jeweils nach außen ausgerückt sind und die Grundplatte sich in einer oberen Stellung befindet. Ausgehend von dieser Grund- oder Anfangsstellung können die Haltedeckel der Profilhalter zum Einlegen eines oder mehrerer Profilstränge geöffnet und anschließend zum Festlegen derselben wieder geschlossen werden. Ausgehend von dieser Grundstellung der Vorrichtung kann dieselbe durch das Aufbringen einer vertikalen Druckkraft nach unten in eine Schneidstellung gebracht werden. Hierbei wird der sich zwischen den Profilhaltern befindliche Profilstrangteil oder werden die Profilstrangteile abgetrennt und von dem sich zwischen den Profilhaltern befindlichen Abstreifer nach unten von den Stegen weg bewegt. Ein Entfernen der Druckkraft bewirkt eine Bewegung der Grundplatte und der Profilhalter nach oben. In einem zweiten Arbeitsgang kann dann, durch einfaches Verschieben eines oder der Profilhalter auf den jeweils anderen Profilhalter zu, die Vorrichtung in eine Schweißstellung gebracht werden. Hierbei liegen die Innenseiten der Nutformteile und der Gegenstücke aneinander an, so daß eine Verschweißung der Profilstrangteile erfolgen kann. Durch das direkte Aufeinanderzuschieben der Profilstrangteile wird die zum Verschweißen notwendige Kraft gleichmäßig auf die Kontaktfläche der Profilstrangteile verteilt, so daß eine gleichmäßige und sichere Verschweißung der Profilstrangteile erfolgen kann. Weiterhin besticht das erfindungsgemäße Verfahren durch seine Einfachheit, da lediglich zwei Arbeitsgänge erforderlich sind, und zwar das Einlegen des oder der Profilstränge und das Niederdrücken der Grundplatte über die Knäufe und das Zusammendrücken der Profilhalter. Damit ist die Bedienungsperson weitgehend von ermüdungs- und fehlerträchtigen Arbeiten bei der Bearbeitung von Profilsträngen befreit.

Die Erfindung schafft in besonders vorteilhafter Weise eine Vorrichtung und ein Verfahren zum Bearbeiten von Profilsträngen, die eine gleichmäßige Verschweißung von hoher Güte von großen, mit Hohlprofilen versehenen und anderen schwierig zu verschweißenden Profilformen realisiert. Durch das Aufeinanderzuschieben der Profilhalter wird die Güte von jeglichen Verschweißungen von geeigneten Teilen und Materialien verbessert. Weiterhin ist es möglich, mit einer Vorrichtung verschiedene Gehrungswinkel zu schweißen, da die Nutformteile und die dazu gehörigen Gegenstücke ausgewechselt werden können. Ein weiterer Vorteil der Auswechselbarkeit der Nutformteile und der U-förmig ausgebildeten Schneid/Schweißeinrichtung ist, daß Stumpfschweißungen, Winkelschweißungen und Schweißungen von mehreren verschiedenen Dichtungsprofilen mit verschiedenen Winkeln in einem Arbeitsgang und mit einer Vorrichtung möglich werden. Zudem besticht die erfindungsgemäße kombinierte Schneid/Schweißvorrichtung durch ihre einfache Handhabung für eine Bedienungsperson.

Weitere Vorzüge und Besonderheiten der Erfindung ergeben sich aus der Beschreibung von Ausführungsbeispielen anhand der Zeichnungen. Es zeigen:
- Fig. 1: eine Perspektivansicht der Vorrichtung in der Ausgangsstellung,
- Fig. 2: eine schematische Seitenansicht der Vorrichtung in der Schweißstellung,
- Fig. 3: eine schematische Seitenansicht eines Profilhalters in einem geschlossenen Zustand,
- Fig. 4: eine schematische Seitenansicht eines Profilhalters in einem offenen Zustand,
und
- Fig. 5: eine schematische Draufsicht auf Bodenplatten mit entsprechenden Nutformteilen zur Herstellung von verschiedenen Gehrungswinkeln.

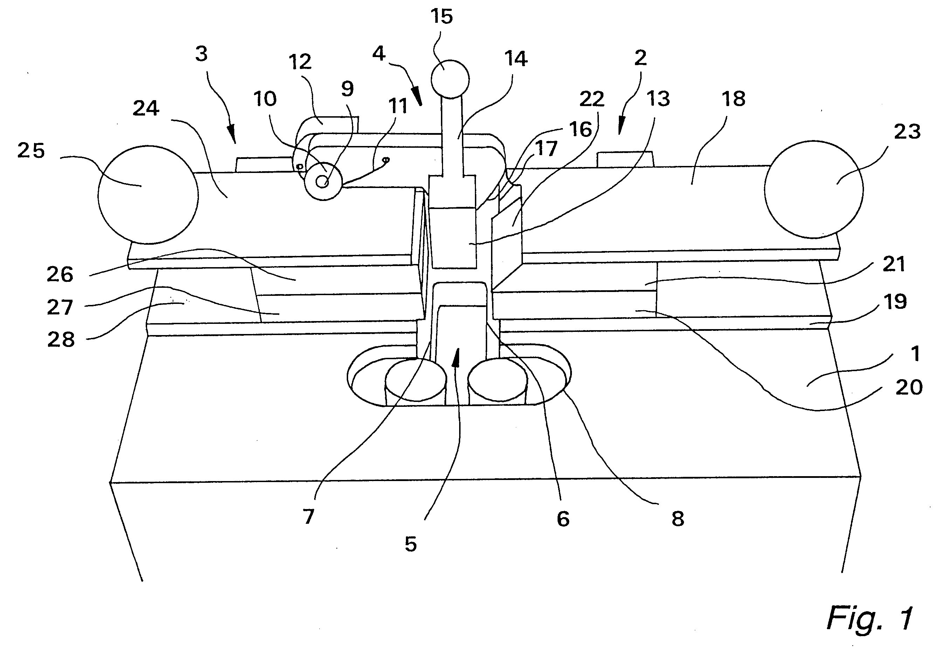

Die Vorrichtung nach Fig. 1 weist eine Grundplatte 1 mit darauf angeordneten Profilhaltern 2, 3 auf. An dem Profilhalter 3 ist ein Abstreifer 4 angeordnet, der verschwenkbar an dem Profilhalter 3 angelenkt ist. Auf einem nicht dargestellten Basisteil ist eine Schneid/Schweißeinheit 5 mit Stegen 6 und 7 angeordnet. Die Stege 6 und 7 sind parallel angeordnet, wodurch die Schweißeinheit 5 U-förmig ausgebildet ist. Der Abstand der Stege 6 und 7 ist derart gewählt, daß die Schneid/Schweißeinheit 5 in den von den Profilhaltern 2 und 3 gebildeten Zwischenraum einführbar ist. Die Schneid/Schweißeinheit ist vorzugsweise ein Thermomesser, das widerstandserwärmt wird. Die Schneid/Schweißeinheit kann aber auch ohne Erwärmung betrieben werden, wobei dann der Abtrennvorgang des Dichtungsprofils ausschließlich durch Schneiden und Abscheren verursacht wird. Die Grundplatte 1 weist eine Öffnung 8 auf, die so ausgebildet ist, daß die Bewegung der Grundplatte 1 nach unten über die Schneid/Schweißeinheit 5 nicht behindert wird.

Der Abstreifer 4 ist über eine Achse 9 mit dem Profilhalter 3 verschwenkbar verbunden. Am nach vorne weisenden Ende der Achse ist eine Beilagscheibe 10 angeordnet. Zwischen der Beilagscheibe 10 und dem Körper des Abstreifers 4 ist eine Feder 11 angeordnet. Das eine Ende der Feder ist an dem Abstreifer festgelegt und das andere Ende der Feder ist an einem Aufnehmer 12 für den Abstreifer 4 angeordnet. Dadurch wird der Abstreifer durch die Federkraft nach unten gedrückt. Der Abstreifer 4 weist eine Abstreifnase 13 auf, die derart dimensioniert ist, daß sie zwischen die Stege 6 und 7 zum Abstreifen von Dichtungsteilen von den Stegen 6 und 7 einführbar ist. Die Abstreifnase 13 ist mit einem Halteteil 14 justierbar verbunden. Durch ein nicht dargestelltes in der Abstreifnase 13 gebildetes Langloch kann die Abstreifnase 13 vertikal gegenüber dem Halteteil 14 verstellt und in einer passenden Stellung festgelegt werden. Das Halteteil 14 wiederum ist horizontal verschiebbar in einer Nut des Abstreifers 4 festlegbar angeordnet. An dem der Abstreifnase 13 gegenüberliegenden Ende des Halteteils 14 ist ein Handknauf 15 angeordnet. Durch diesen Handknauf 15 kann eine Bedienungsperson den Abstreifer 4 einfach verschwenken. Der Abstreifer weist an der der Anlenkung an dem Profilhalter 3 gegenüberliegenden Seite eine Nockenfläche 16 auf, die in Kontakt mit einer Anschlagfläche 17 bringbar ist, die am Profilhalter 2 ausgebildet ist.

Der Profilhalter 2 weist einen Haltedeckel 18 und eine Bodenplatte 19 auf. Die Bodenplatte 19 ist derart mit der Grundplatte 1 verbunden, daß sie längsverschiebbar in Richtung auf den Profilhalter 3 ist. An der Bodenplatte 19 ist ein Nutformteil 20 lösbar und lageverschiebbar (justierbar) angeordnet. An dem Haltedeckel 18 ist innenseitig ein Gegenstück 21 angeordnet. Das Gegenstück 21 ist auswechselbar und justierbar mit dem Haltedeckel 18 verbunden und weist vorderseitig eine Abschrägung 22 auf. Die Abschrägung 22 ist so ausgebildet, daß die Abstreifnase 13 des Abstreifers 4 bei einer Bewegung nach oben des Abstreifers 4 nicht mit dem Profilhalter 2 kollidiert, wenn dieser von seiner ausgerückten in die eingerückte Stellung längsverschoben wird. Der Haltedeckel 18 weist einen Knauf 23 auf, der an der Oberseite derart angeordnet ist, daß er von einer Bedienungsperson leicht umfaßt werden kann. Der Haltedeckel 18 des Profilhalters 2 weist an seiner vorderen linken Seite, von oben betrachtet, die Anschlagfläche 17 auf. Die Anschlagfläche 17 ist so ausgearbeitet, daß sie mit der geeignet gekrümmten Nockenfläche 16 des Abstreifers, wenn der Profilhalter 18 eingerückt wird, derart in Kontakt kommt, daß der Abstreifer 4 ohne ein Verklemmen und leichtgängig nach oben geschoben wird.

Der Profilhalter 3 weist einen Haltedeckel 24 mit einem daran angeordneten zweiten Knauf 25 auf. An der Unterseite des Haltedeckels 24 ist ein Gegenstück 26 justierbar und lösbar festgelegt. Gegenüber des Gegenstücks 26 ist auf einer Bodenplatte 28 ein Nutformteil 27 lösbar und justierbar angeordnet. Das Bodenteil 28 ist fest mit der Grundplatte 1 verbunden. Die Gegenstücke 21 und 26 und die Nutformteile 20 und 27 können mit den Haltedeckeln 18 und 24 sowie den Bodenplatten 19 und 28 jeweils verschraubt, gesteckt oder verrastet sein. Die Haltedeckel 18 und 24 sind mit den Bodenplattn 19 und 28 durch ein Gelenk derart verbunden, daß die Haltedeckel 18 und 24 von einer Bedienungsperson z. B. über die Knäufe 23 und 25 einfach nach oben verschwenkt werden können. Die Haltedeckel 18 und 24 können auch in einer geschlossenen Stellung verrastet werden (nicht dargestellt).

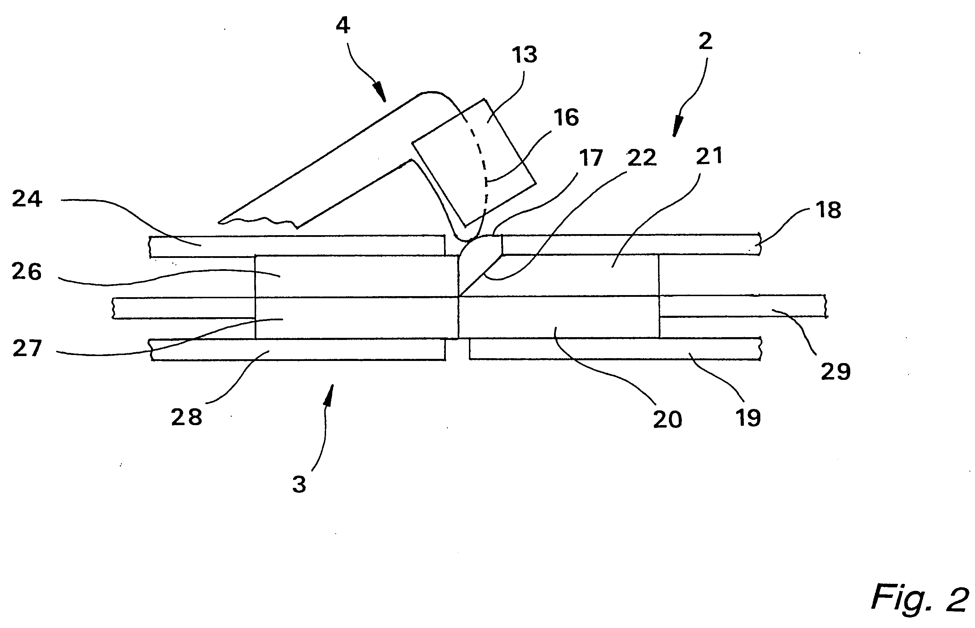

In Fig. 2 ist der Profilhalter 2 im eingerückten Zustand gezeigt. Hierbei kommt die innere Endfläche des Nutformteils 20 mit der inneren Endfläche des Nutformteils 27 in Kontakt. Dadurch werden Profilstrangenden eines Profilstrangs 29 zusammengeführt. In dieser Schweißstellung der Vorrichtung erfolgte ein vorhergehendes Abtrennen der Profilstränge 29 in einer Schneidstellung der Vorrichtung. In dieser Schneidstellung werden die Profilhalter 2 und 3 in einer ausgerückten Position nach unten über die Schneid/Schweißeinheit 5 gegen eine Federkraft von nicht dargestellten Führungen geführt geschoben. Danach wird die Vorrichtung aus der Schneidstellung in die in Fig. 2 dargestellte Schweißstellung übergeführt, wobei die Enden der Profilstränge 29 noch von dem vorherigen Schneidvorgang aufgeschmolzen sind. In der eingerückten Stellung des Profilhalters 2 ist der Abstreifer 4 nach oben durch einen Verschiebekontakt der Anschlagfläche 17 mit der Nockenfläche 13 ausgeschwenkt und liegt auf der Anschlagfläche 17 auf. Die Abstreifnase 13 kann sich während der Bewegung des Abstreifers 4 nach oben nicht gegen den Profilhalter 2 verklemmen, da das Gegenstück 21 vorderseitig eine Abschrägung 22 aufweist und der Haltedeckel 18 entsprechend zurückversetzt ist.

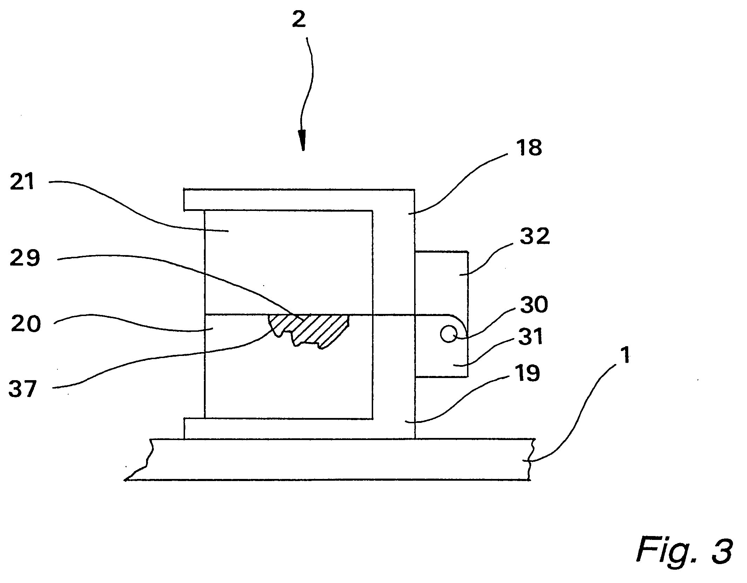

In Fig. 3 ist eine Seitenansicht des Profilhalters 2 mit dem Gegenstück 21 und dem Nutformteil 20 gezeigt. Der Haltedeckel 18 ist nach unten gegen die Bodenplatte 19 geschwenkt, wobei das Gegenstück 21 auf dem Nutformteil 20 derart aufliegt, daß der Profilstrang 29 festgelegt ist. Die Verschwenkung zum Öffnen des Haltedeckels 18 erfolgt über ein an dem Haltedeckel 18 festgelegtes oberes Gelenkteil 32 und ein an der Bodenplatte 19 festgelegtes unteres Gelenkteil 31, welche über eine Achse 30 bewegbar verbunden sind. In dem Nutformteil 20 ist eine Profilnut 37 eingearbeitet. Diese Profilnut 37 ist entsprechend den zu bearbeitenden Profilstrangformen ausgebildet, so daß der Profilstrang 29 mit der Profilseite in die Profilnut 37 paßt. Die Profilnut 37 ist hierbei z. B. längs an der Oberseite des Nutformteils 20 angeordnet. In dem Nutformteil 27 des Profilhalters 3 (Fig. 1) ist ebenfalls eine Profilnut ausgebildet, welche in der eingerückten Position des Profilhalters 2 mit der Profilnut 37 in dem Nutformteil 20 fluchtet. In die Nutformteile 20 und 27 können auch mehrere Nuten eingeformt werden. Dadurch kann nicht nur ein Profilstrang 29 stumpfverschweißt werden, es können auch mehrere verschiedene Profile gleichzeitig bearbeitet werden.

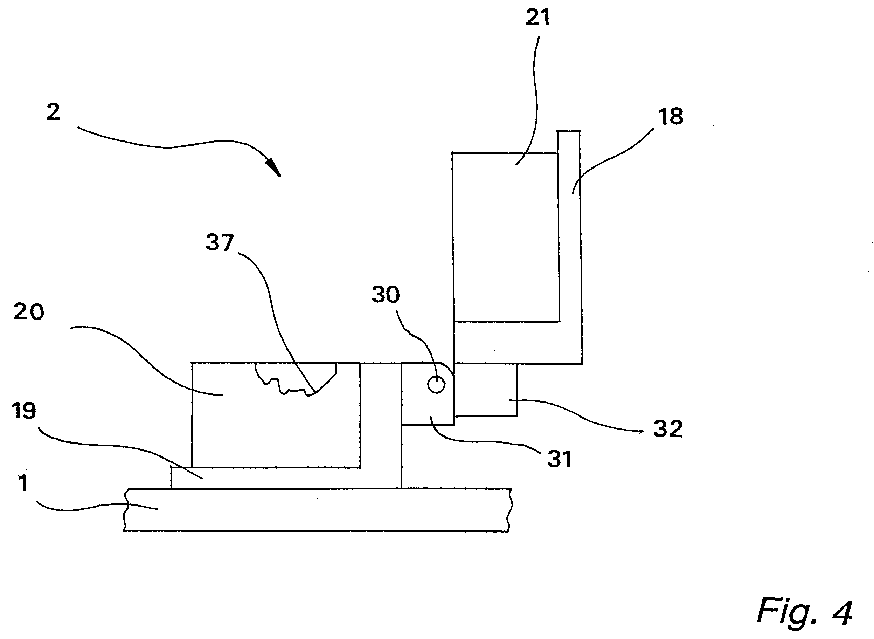

In Fig. 4 ist der Profilhalter 2 in geöffnetem Zustand dargestellt.

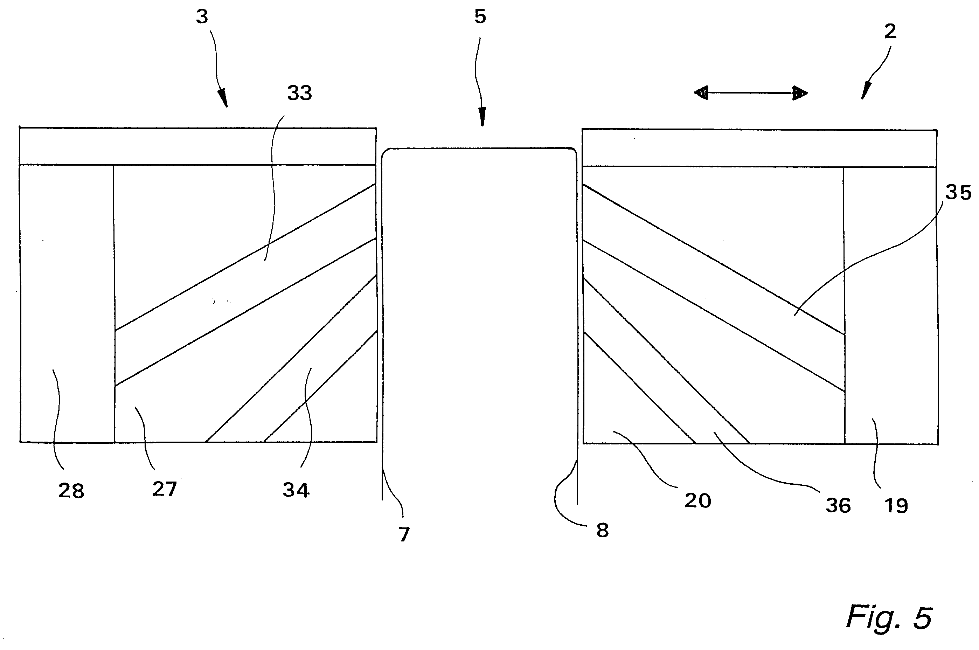

In Fig. 5 sind die Bodenplatten 19 und 28 der Profilhalter 2 und 3 gezeigt. Auf den Bodenplatten 19 und 28 sind jeweils Nutformteile 20 und 27 angeordnet. Die Nutformteile 20 und 27 weisen jeweils komplementär Profilnuten 33 bis 36 auf, die jeweils innenseitig zur Schneid/Schweißeinheit 5 hin fluchten. In einem eingerückten nicht dargestellten Zustand des Profilhalters 2, durch eine Längsverschiebung desselben entlang des gezeigten Pfeils nach innen, stehen sich die Profilnuten 33 und 35 in einem Winkel von 120° und die Profilnuten 34 und 36 in einem Winkel von 90° zueinander gegenüber. Dadurch können zwei verschiedene Gehrungswinkel in einem Arbeitsgang hergestellt werden. Die Profilnuten können auch mit anderen Winkeln zueinander angeordnet sein und es ist eine Anordnung von mehr als den dargestellten Profilnuten denkbar. Die jeweiligen Profilnuten 33/35 und 34/36 können auch unterschiedliche Nutprofile aufweisen, wodurch verschiedene Profile bearbeitet werden können. Natürlich kann auch in beiden Profilhaltern 20 und 27 eine fluchtende Endlosschweißnut 37 (nicht dargestellt) zusätzlich oder separat angeordnet sein. Weiterhin kann es für bestimmte Anwendungen mit verschiedenen erforderlichen Gehrungswinkeln vorteilhaft sein, wenn auf einer Bodenplatte 19, 28 mehrere Nutformteile mit gleichen oder verschiedenen Nutprofilen angeordnet sind.

Die Vorrichtung kann auch automatisiert ausgeführt werden. Dazu sind geeignete Elektromotoren vorzusehen, welche über Getriebeverzahnungen oder Riemenscheiben die erforderlichen Bewegungen der Grundplatte und die Einrückbewegung des oder der entsprechenden Profilhalter vornehmen. Auch das Einlegen des oder der Profilstränge kann durch einen geeigneten Roboterarm automatisiert werden. Durch eine geeignete Prozeßsteuerung, die über einen geeigneten Prozeßrechner angesteuert wird, kann der gesamte Schneid- und Schweißvorgang, z. B. zur vollständigen Fensterdichtungsherstellung, automatisiert werden.

Weiterhin kann die Vorrichtung mit einer geeigneten Stanzvorrichtung gekoppelt werden, die vor oder hinter der Vorrichtung angeordnet ist. Dadurch können geeignete Seitenlängen des Dichtungsprofils zum Ablängen einfach auf Maß gebracht werden. Weiterhin ist eine mit der Vorrichtung verbundene Ausklinkeinheit für Ecken denkbar, welche in Kombination mit der Vorrichtung ein Universalgerät für die Herstellung von Fenster- und Türdichtungen mit verschiedensten Profilmaterialien und Profilquerschnitten für verschiedene Anwendungen darstellt.

## Patentansprüche

1. Vorrichtung zum Bearbeiten von Profilsträngen (29), insbesondere von Dichtungsprofilen für Fenster, Türen od. dgl.,
**gekennzeichnet durch**
eine Grundplatte (1),
auf der Grundplatte (1) angeordnete Profilhalter (2, 3) zum Aufnehmen des oder der Profilstränge (29), wobei zumindest ein Profilhalter (2) längsverschiebbar relativ zur Grundplatte (1) ausgebildet ist,
eine an einem Basisteil angeordnete Schneid/Schweißeinheit (5) mit Stegen (6, 7), und
einen an einem Profilhalter (3) verschwenkbar angelenkten Abstreifer (4) zum Abstreifen abgetrennter Profilstrangteile.

2. Vorrichtung nach Anspruch 1,
dadurch gekennzeichnet, daß
zumindest ein Profilhalter (2) auf der Grundplatte (1) verschiebbar nach innen in Richtung auf den jeweilig anderen Profilhalter (3) ist,
die Profilhalter (2, 3) Haltedeckel (18, 24) aufweisen,
die zum Öffnen und Schließen der Profilhalter (2, 3) verschwenkbar ausgebildet sind.

3. Vorrichtung nach Anspruch 1 oder 2,
dadurch gekennzeichnet, daß
die Profilhalter (2, 3) jeweils zumindest eine Profilnut (37) in einem an einer Bodenplatte (19, 28) angeordneten Nutformteil (20, 27) und ein an dem Haltedeckel (18, 24) angeordnetes Gegenstück (21, 26) aufweisen, die lösbar an den jeweiligen Profilhalter (2, 3) angeordnet sind.

4. Vorrichtung nach Anspruch 1 bis 3,
dadurch gekennzeichnet, daß
die Profilhalter (2, 3) jeweils einen ergonomisch ausgeformten Knauf (23, 25) aufweisen, die an den Oberseiten der jeweiligen Haltedeckel (18, 24) festgelegt sind.

5. Vorrichtung nach Anspruch 1 bis 4,
dadurch gekennzeichnet, daß
der Abstreifer (4) eine Nockenfläche (16), die mit einer Anschlagfläche (17) am gegenüberliegenden Profilhalter (2) durch eine Längsverschiebung zumindest eines Profilhalters (2) in Eingriff bringbar ist und eine Abstreifnase (13) aufweist, die in den von den Stegen (6, 7) gebildeten Raum einführbar ist,
der Abstreifer (4) derart ausgebildet ist, daß er durch ein Aufeinanderzubewegen der Profilhalter (2, 3) durch Anlage der Nockenfläche (16) an die Anschlagfläche (17) nach oben gedrückt wird.

6. Vorrichtung nach Anspruch 1 bis 5,
dadurch gekennzeichnet, daß
die Schneid/Schweißeinheit (5) U-förmig ausgebildet ist.

7. Vorrichtung nach Anspruch 1 bis 6,
dadurch gekennzeichnet, daß
die Grundplatte (1) mit den Profilhaltern (2, 3) vertikal verschiebbar auf dem Basisteil gelagert ist und durch Federn elastisch in einer oberen Stellung gehalten wird.

8. Verfahren zum Bearbeiten von Profilsträngen, insbesondere von Dichtungsprofilen für Fenster, Türen od. dgl., mit den folgenden Schritten:
- Öffnen von Profilhaltern (2, 3) wobei sich der oder die Profilhalter in einer ausgerückten Stellung befinden,
- Einlegen von einem oder der zu bearbeitenden Profilstränge (29) in die Profilhalter (2, 3),
- Schließen der Profilhalter (2, 3) zum Festlegen des oder der Profilstränge (29),
- Bewegen einer Grundplatte (1) mit den damit verbundenen Profilhaltern (2, 3) und dem oder den Profilsträngen (29) gegen eine Federkraft nach unten in eine Schneidstellung, so daß der oder die Profilstränge (29) mit einer Schneid/Schweißeinrichtung (5) derart in Kontakt kommen, daß die nach innen von den Profilhaltern (2, 3) überstehenden jeweiligen Profilstrangteile abgelöst und von einem Abstreifer (4) nach unten gedrückt werden,
- Bewegen der Grundplatte (1) nach oben und
- Verschweißen der angeschmolzenen inneren Endflächen des oder der Profilstränge (29) in einer Schweißstellung durch ein Zusammenschieben des oder der Profilhalter (2, 3), wobei der Abstreifer (4) durch ein Anlegen einer Nockenfläche (16) an eine Anschlagfläche (17) des gegenüberliegenden Profilhalters (2, 3) nach oben aus dem Zwischenraum zwischen den Profilhaltern (2, 3) gedrückt wird.
